# EUROPEAN PATENT SPECIFICATION

(11) **EP 2 794 558 B1**
(45) Date of publication and mention of the grant of the patent: **26.04.2017**
(21) Application number: 12858931.4
(22) Date of filing: 17.12.2012
(51) Int. Cl.: B41M 5/333

(54) **HEAT SENSITIVE COATING COMPOSITION**
WÄRMEEMPFINDLICHE BESCHICHTUNGSZUSAMMENSETZUNG
COMPOSITION DE REVÊTEMENT THERMOSENSIBLE

(30) Priority: 20.12.2011 US 201161577691 P; 20.12.2011 EP 11194556
(43) Date of publication of application: 29.10.2014
(73) Proprietor: BASF SE, 67056 Ludwigshafen am Rhein (DE)
(72) Inventor: O'NEIL, Robert Montgomery, Davyhulme Manchester M41 (GB); HOOK, Lukasz, 67346 Speyer (DE)
(74) Representative: Bernhardt, Wolfgang Willy-Hans
(86) International application number: PCT/IB2012/057371
(87) International publication number: WO 2013/093755

(56) References cited:
- EP-A1- 1 512 545
- WO-A1-00/35679
- WO-A1-03/101943
- WO-A1-03/101943
- GB-A- 2 441 020
- GB-A- 2 441 020

## Description

The present invention relates to a method of reducing the static sensitivity of a heat sensitive coating composition comprising a colour forming compound and a colour developer wherein N-(p-toluenesulphonyl)-N'-(3-p-toluenesulphonyl-oxy-phenyl)urea having an X-ray powder pattern having Bragg angles (2θ/CuK_{α}) of 10.3, 11.1, 13.0, 13.3, 15.6, 17.1, 18.4, 19.6, 20.0, 20.8, 21.3, 23.1, 25.0, 25.5, 26.4, 26.8, 27.5, 29.1, 32.8 is used as colour developer.

Examples 1 and 3 of WO 03/101943 describe the manufacture of a polymorphic form of N-(p-toluenesulphonyl)-N'-(3-p-toluenesulphonyl-oxy-phenyl)urea. Although the general use in heat sensitive coating compositions is described, no specific data are given. WO 00/035679 describes the manufacture of N-(p-toluenesulphonyl)-N'-(3-p-toluenesulphonyl-oxy-phenyl)urea in general as well as its use in heat sensitive coating compositions with increased stability and at the same time improved background whiteness of paper before and after ageing. However, there is still a need for a thermal paper having a low static sensitivity and a high dynamic sensitivity in order to be able to print at high speed and to yield a good image resolution.

GB 2,441,020 A describes a heat sensitive coating composition comprising a colour former, 1,5-diisopropylnaphthalene as sensitizer and a colour developer, wherein the colour developer is selected from the group consisting of inter alia N-(p-toluenesulphonyl)-N'-(3-p-toluenesulphonyl-oxy-phenyl)urea. The motivation for choosing this composition was to avoid the use of bis-phenol A as colour developer and to get improved high image and background stabilities as well as at the same time low static and high dynamic sensitivities compared to heat sensitive coating compositions disclosed in Japanese laid open patent 03-087289.

Generally, the lower the static sensitivity, the higher the temperature can be chosen to form an image. Usually with low static sensitivity sharper images are achievable. On the other hand, the more sensitive the thermal coating of a paper the faster it can be printed, because less heat energy is needed at the print head of the printer. Since one of the primary applications of direct thermal printing is generating barcodes, it is important to select a paper with an optimal sensitivity to generate dark images with a high resolution. Otherwise, if the barcodes are faint or inconsistently printed, they will be unscannable. Naturally, when the static sensitivity is lowered, a higher temperature for forming images is applied, which leads to a decrease of the dynamic sensitivity and vice versa. Therefore, a method is needed which lowers the static sensitivity while at least not deteriorating the dynamic sensitivity at the same time.

Hence, the present invention is directed to a method of reducing the static sensitivity of a heat sensitive coating composition comprising a colour forming compound, a colour developer and a sensitizer wherein N-(p-toluenesulphonyl)-N'-(3-p-toluenesulphonyl-oxy-phenyl)urea having an X-ray powder pattern having Bragg angles (2θ/CuK_{α}) of 10.3, 11.1, 13.0, 13.3, 15.6, 17.1, 18.1, 18.4, 19.6, 20.0, 20.8, 21.3, 23.1, 25.0, 25.5, 26.4, 26.8, 27.5, 29.1, 32.8 is used as colour developer.

Further, the invention is directed to the above method, wherein the reduction is expressed as a temperature increase by at least 2°C at an optical density level of 0.2.

Heat-sensitive recording materials produced according to the inventive method exhibit a reduced static sensitivity that may be evidenced, for example, by an increase of at least 2°C in the temperature required for the onset of coloration. In general, an optical density of 0.2 is regarded as the onset of coloration and an optical density of approximately 1.1 is normally a full black image to the human eye.

The compounds usually are obtained by treating N-(p-toluenesulphonyl)-N'-(3-p-toluenesulphonyl-oxy-phenyl)urea obtained according to example 4 of WO 00/35679 with a solvent for a period in the range of 1 to 100 hours at a temperature in the range of 0 to 150°C, then isolating N-(p-toluenesulphonyl)-N'-(3-p-toluenesulphonyl-oxy-phenyl)urea as described in detail in examples 1 and 3 of WO 03/101943.

The solvent of choice maybe selected from the group consisting of aromatic hydrocarbons, chlorinated aromatic hydrocarbons, aliphatic or alicyclic hydrocarbons, chlorinated hydrocarbons, dialkylacylamides, aliphatic esters, aliphatic ketones, alicyclic ketones, aliphatic ethers, cyclic ethers, alkylnitriles or mixtures thereof. Most preferred are toluene, xylenes, petroleum ether, cyclohexane, dimethyl formamide, dimethylacetamide, ethylacetate, propyl acetate, butylacetate, diethylether, dibutylether, tetrahydrofuran, acetone, butanone, cyclohexanone, nitromethane, acetonitrile, propionitrile, nitromethane, ethyleneglycoldimethylether, chloroform, dichloromethane, carbon tetrachloride, chlorobenzene, dichlorobenzene, dioxan or mixtures thereof.

In a preferred embodiment, toluene is chosen as solvent for the manufacture of N-(p-toluenesulphonyl)-N'-(3-p-toluenesulphonyl-oxy-phenyl)urea having an X-ray powder pattern having Bragg angles (2θ/CuK_{α}) of 10.3, 11.1, 13.0, 13.3, 15.6, 17.1, 18.1, 18.4, 19.6, 20.0, 20.8, 21.3, 23.1, 25.0, 25.5, 26.4, 26.8, 27.5, 29.1, 32.8.

Methods for manufacturing heat sensitive coating compositions are well known in the art according to conventional methods. For example, at least one colour forming compound and at least one colour developer, and optionally at least one sensitizer, are pulverised separately in water or a suitable dispersing medium such as aqueous polyvinyl alcohol by means of a mill such as a bead mill, an attritor, a sand mill or like pulveriser to form an aqueous or other dispersion with an average particle diameter of about 0.2 to 2.0 µm.

The fine particle dispersions thus obtained are combined and then mixed with conventional amounts of binder, pigment, lubricant and, if desired, a stabiliser and/or one or more auxiliaries, and the resulting mixture is stirred to obtain a heat sensitive recording layer composition. The coating composition is applied to a support and the resulting coating is dried. The system of the invention can be employed for other end use applications using colour forming materials, for example, a temperature indicating material.

The support can be a variety of suitable supports used in this field, and examples thereof include paper, wood-free paper made from non-chlorine bleached pulp, base paper containing waste paper plastic films, and synthetic paper.

Typically, the amount of the colour former (or mixture of colour formers) is chosen in the range of from 5 to 15 % by weight, based on dry weight of heat sensitive coating composition.

Typically, the amount of the colour developer (or mixture of colour developers) is chosen in the range of from 10 to 50% by weight, based on dry weight of heat sensitive coating composition.

Typically, the amount of the sensitizer (or mixture of sensitizers) is chosen in the range of from 10 to 50 % by weight, based on dry weight of heat sensitive coating composition.

Typically, the amount of the stabilizer is chosen in the range of from 5 to 20 % by weight, based on dry weight of heat sensitive coating composition.

The colour forming compounds are, for example, triphenylmethanes, lactones, benzoxazines, spiropyrans or preferably fluorans.

Preferred colour formers include but are not limited to: 3-diethylamino-6-methylfluoran, 3-dimethylamino-6-methyl-7-anilinofluoran, 3-diethylamino-6-methyl-7-anilinofluoran, 3-diethylamino-6-methyl-7-(2,4-dimethylanilino) fluoran, 3-diethylamino-6-methyl-7-chlorofluoran, 3-diethylamino-6-methyl-7-(3-trifluoromethylanilino) fluoran, 3-diethylamino-6-methyl-7-(2-chloroanilino) fluoran, 3-diethylamino-6-methyl-7-(4-chloroanilino) fluoran, 3-diethylamino-6-methyl-7-(2-fluoroanilino) fluoran, 3-diethylamino-6-methyl-7-(4-n-octylanilino) fluoran, 3-diethylamino -7-(4-n-octylanilino) fluoran, 3-diethylamino -7-(n-octylamino) fluoran, 3-diethylamino -7-(dibenzylamino) fluoran, 3-diethylamino-6-methyl-7-(dibenzylamino) fluoran, 3-diethylamino-6-chloro-7-methylfluoran, 3-diethylamino-7-t-butylfluoran, 3-diethylamino -7-carboxyethylfluoran, 3-diethylamino-6-chloro-7-anilinofluoran, 3-diethylamino-6-methyl-7-(3-methylanilino) fluoran, 3-diethylamino-6-methyl-7-(4-methylanilino) fluoran, 3-diethylamino-6-ethoxyethyl-7-anilinofluoran, 3-diethylamino-7-methylfluoran, 3-diethylamino-7-chlorofluoran, 3-diethylamino-7-(3-trifluoromethylanilino) fluoran, 3-diethylamino-7-(2-chloroanilino) fluoran, 3-diethylamino-7-(2-fluoroanilino) fluoran, 3-diethylamino-benzo[a] fluoran, 3-diethylaminobenzo[c] fluoran, 3-dibutylamino-7-dibenzylaminofluoran , 3-dibutylamino-7-anilinofluoran , 3-diethylamino-7-anilinofluoran, 3-dibutylamino-6-methyl fluoran, 3-dibutylamino-6-methyl-7-anilinofluoran, 3-dibutylamino-6-methyl-7-(2,4-dimethylanilino) fluoran, 3-dibutylamino-6-methyl-7-(2-chloroanilino) fluoran, 3-dibutylamino-6-methyl-7-(4-chloroanilino) fluoran, 3-dibutylamino-6-methyl-7-(2-fluoroanilino) fluoran, 3-dibutylamino-6-methyl-7-(3-trifluoromethylanilino) fluoran, 3-dibutylamino-6-ethoxyethyl-7-anilinofluoran, 3-dibutylamino-6-chloro-anilinofluoran, 3-dibutylamino-6-methyl-7-(4-methylanilino) fluoran, 3-dibutylamino-7-(2-chloroanilino) fluoran, 3-dibutylamino-7-(2-fluoroanilino) fluoran, 3-dibutylamino-7-(N-methyl-N-formylamino) fluoran, 3-dipentylamino-6-methyl-7-anilinofluoran, 3-dipentylamino-6-methyl-7-(2-chloroanilino) fluoran, 3-dipentylamino-7-(3-trifluoromethylanilino) fluoran, 3-dipentylamino-6-chloro-7-anilinofluoran, 3-dipentylamino-7-(4-chloroanilino) fluoran, 3-pyrrolidino-6-methyl-7-anilinofluoran, 3-piperidino-6-methyl-7-anilinofluoran, 3-(N-methyl-N-propylamino)-6-methyl-7-anilinofluoran, 3-(N-methyl-N-cyclohexylamino)-6-methyl-7-anilinofluoran, 3-(N-ethyl-N-cyclohexylamino)-6-methyl-7-anilinofluoran, 3-(N-ethyl-p-toluidino)-6-methyl-7-anilinofluoran, 3-(N-ethyl-N-isoamylamino)-6-methyl-7-anilinofluoran, 3-(N-ethyl-N-isoamylamino)-6-chloro-7-anilinofluoran, 3-(N-ethyl-N-tetrahydrofurfurylamino)-6-methyl-7-anilinofluoran, 3-(N-ethyl-N-isobutylamino)-6-methyl-7-anilinofluoran, 3-(N-butyl-N-isoamylamino)-6-methyl-7-anilinofluoran, 3-(N-isopropyl-N-3-pentylamino)-6-methyl-7-anilinofluoran, 3-(N-ethyl-N-ethoxypropylamino)-6-methyl-7-anilinofluoran, 3-cyclohexylamino-6-chlorofluoran, 2-methyl-6-p-(p-dimethylaminophenyl)aminoanilinofluoran, 2-methoxy-6-p-(p-dimethylaminophenyl)-aminoanilinofluoran, 2-chloro-3-methyl-6-p-(p-phenylaminophenyl)aminoanilinofluoran, 2-diethylamino-6-p-(p-dimethylaminophenyl)aminoanilinofluoran, 2-phenyl-6-methyl--6-p-(p-phenylaminophenyl)aminoanilinofluoran, 2-benzyl-6-p-(p-phenylaminophenyl)amino-anilinofluoran, 3-methyl-6-p-(p-dimethylaminophenyl)aminoanilinofluoran, 3-diethylamino-6-p-(p-diethylaminophenyl)aminoanilinofluoran, 3-diethylamino-6-p-(p-dibutylaminophenyl)-aminoanilinofluoran, 2,4-dimethyl-6-[(4-dimethylamino)anilino] fluoran, 3-[(4-dimethyl-aminophenyl)amino]-5,7-dimethylfluoran, 3,6,6'-tris(dimethylamino)spiro[fluorene-9,3'-phthalide], 3,6,6'-tris(diethylamino)spiro[fluorene-9,3'-phthalide], 3,3-bis(p-dimethylamino-phenyl)-6-dimethylaminophthalide, 3,3-bis(p-dimethylaminophenyl)phthalide, 3,3-bis-[2-(p-dimethylaminophenyl)-2-(p-methoxyphenyl)ethenyl-4,5,6,7-tetrabromophthalide, 3,3-bis-[2-(p-dimethylaminophenyl)-2-(p-methoxyphenyl)ethenyl-4,5,6,7-tetrachlorophthalide, 3,3-bis[1,1-bis(4-pyrrolidinophenyl)ethylene-2-yl]-4,5,6,7-tetrabromophthalide, 3,3-bis-[1-(4-methoxyphenyl)-1-(4-pyrridinophenyl)ethylene-2-yl]-4,5,6,7-tetrachlorophthalide, 3-(4-diethylamino-2-ethoxyphenyl)-3-(1-ethyl-2-methylindole-3-yl)-4-azaphthalide, 3-(4-diethylamino-2-ethoxyphenyl)-3-(1-octyl-2-methylindole-3-yl)-4-azaphthalide, 3-(-cyclohexylethylamino-2-methoxyphenyl)-3-(1-ethyl-2-methylindole-3-yl)-4-azaphthalide, 3,3-bis(1-ethyl-2-methylindole-3-yl) phthalide, 3,3-bis(1-octyl-2-methylindole-3-yl) phthalide, mixture of 2-phenyl-4-(4-diethylaminophenyl)-4-(4-methoxyphenyl)-6-methyl-7-dimethylamino-3,1-benzoxazine and 2-phenyl-4-(4-diethylaminophenyl)-4-(4-methoxyphenyl)-8-methyl-7-dimethylamino-3,1-benzoxazine, 4,4'-[1-methylethylidene)-bis(4,1-phenyleneoxy-4,2-quinazolinediyl)]bis[N,N-diethylbenzenamine], bis(N-methyldiphenylamine)-4-yl-(N-butylcarbazole)-3-yl-methane, 3-diethylamino-6,8-dimethylfluoran, 3-diethylamino-7,8-benzofluoran, 3-diethylaminofluoran-7-carboxylic acid ethyl ester, 3-[N-(4-methylphenyl)-N-ethylamino]-7-methylfluoran, and mixtures thereof.

All of the above colour forming compounds can be used singly or as a mixture with other colour forming compounds; or they may also be used together with further black colour forming compounds.

Highly preferred are 3-diethylamino-6-methyl-7-anilinofluoran, 3-diethylamino-6-methyl-7-(3-methylanilino) fluoran, 3-diethylamino-6-methyl-7-(2,4-dimethylanilino) fluoran, 3-dibutylamino-6-methyl-7-anilinofluoran, 3-dipentylamino-6-methyl-7-anilinofluoran, 3-(N-methyl-N-propylamino)-6-methyl-7-anilinofluoran, 3-(N-methyl-N-cyclohexylamino)-6-methyl-7-anilinofluoran, 3-(N-ethyl-N-isoamylamino)-6-methyl-7-anilinofluoran, 3-diethylamino-6-chloro-7-anilinofluoran, 3-dibutylamino-7-(2-chloroanilino)fluoran, 3-N-ethyl-p-toluidino-6-methyl-7-anilinofluoran, 3-(N-ethyl-N-tetrahydrofurfurylamino)-6-methyl-7-anilinofluoran, 3-(N-ethyl-N-isobutylamino)-6-methyl-7-anilinofluoran, 3-N-ethyl-N-ethoxypropylamino-6-methyl-7-anilinofluoran, 2,4-dimethyl-6-[(4-dimethylamino)anilino]fluoran, 3-(4-diethylamino-2-ethoxyphenyl)-3-(1-octyl-2-methylindole-3yl)-4-azaphthalide, 3,3-bis(p-dimethylaminophenyl)-6-dimethylaminophthalide and mixtures thereof.

It is also possible to use solid solutions comprising at least two colour forming compounds.

A monophase (or single-phase or guest-host) solid solution possesses a crystal lattice which is identical with the crystal lattice of one of its components. One component is embedded as the 'guest' in the crystal lattice of the other component, which acts as the 'host'. The X-ray diffraction pattern of such a monophase solid solution is substantially identical to that of one of the components, called the 'host'. Within certain limits, different proportions of the components produce almost identical results.

In the literature, the definitions by the various authors, such as, G.H.Van't Hoff, A.I.Kitaigorodsky and A.Whitacker for solid solutions and mixed crystals are often contradictory, (cf, e.g. 'Analytical Chemistry of Synthetic Dyes', Chapter 10/page 269, Editor K.Venkataraman, J.Wiley, New York, 1977).

The term 'monophase solid solution' or 'multiphase solid solution' or mixed crystal', as defined herein, therefore, should be taken from the following definitions, which have been adapted to the current improved state of knowledge of such systems:
A monophase (or single-phase or guest-host) solid solution possesses a crystal lattice which is identical with the crystal lattice of one of its components. One component is embedded as the 'guest' in the crystal lattice of the other component, which acts as the 'host'. The X-ray diffraction pattern of such a monophase solid solution is substantially identical to that of one of the components, called the 'host'. Within certain limits, different proportions of the components produce almost identical results.

A multiphase solid solution possesses no precise, uniform crystal lattice. It differs from a physical mixture of its components in that the crystal lattice of at least one of its components is partially or completely altered. In comparison to a physical mixture of the components, which gives an X-ray diffraction diagram that is additive to the diagrams seen for the individual components. The signals in the X-ray diffraction diagram of a multiphase solid solution are broadened, shifted or altered in intensity. In general, different proportions of the components produce different results.

A mixed crystal (or solid compound type) solid solution possesses a precise composition and a uniform crystal lattice, which is different from the crystal lattices of all its components. If different proportions of the components lead, within certain limits, to the same result, then a solid solution is present in which the mixed crystal acts as a host.

For the avoidance of doubt it may also be pointed out that, inter alia, there may also be amorphous structures and mixed aggregates consisting of different particles of different physical type, such as, for example, an aggregate of different components each in pure crystal modification. Such amorphous structures and mixed aggregates cannot be equated with either solid solutions or mixed crystals, and possess different fundamental properties.

As hereinbefore detailed, the monophase solid solutions comprise a plurality of colour compounds. Suitable colour forming materials which may be included in the solid solutions are those given above.

Of particular interest are the following monophase solid solutions:
3-dibutylamino-6-methyl-7-anilinofluoran and 3-dibutylamino-7-dibenzylaminofluoran; 3-dibutylamino-6-methyl-7-anilinofluoran and 3-dibutylamino-7-anilinofluoran; 3-dibutylamino-6-methyl-7-anilinofluoran and 3-diethylamino-7-anilinofluoran; 3-diethylamino-6-methyl-7-anilinofluoran and 3-diethylamino-7-anilinofluoran; 3-dibutylamino-6-methyl-7-anilinofluoran and 3-diethylamino-6-methyl-7-anilinofluoran; 3-dibutylamino-6-methyl-7-anilinofluoran and 3-N-isoamyl-N-ethylamino-6-methyl-7-anilinofluoran; 3-dibutylamino-6-methyl-7-anilinofluoran and 3-N-2-pentyl-N-ethylamino-6-methyl-7-anilinofluoran; 3-dibutylamino-6-methyl-7-anilinofluoran and 3-N-isopropyl-N-ethylamino-6-methyl-7-anilinofluoran; 3-dibutylamino-6-methyl-7-anilinofluoran and 3-N-Cyclohexylmethyl-N-ethylamino-6-methyl-7-anilinofluoran; 3-dibutylamino-6-methyl-7-anilinofluoran and 3-dipropylamino-6-methyl-7-anilinofluoran; 3-dibutylamino-6-methyl-7-anilinofluoran and 3-N-2-butyl-N-ethylamino-6-methyl-7-anilinofluoran; 3-dibutylamino-6-methyl-7-anilinofluoran and 3-N-cyclohexyl-N-methylamino-6-methyl-7-anilinofluoran; 3-dibutylamino-6-methyl-7-anilinofluoran and 3-diethylamino-6-methyl-7-(3-methylanilino) fluoran; 3-dibutylamino-6-methyl-7-anilinofluoran and 3-diethylamino-6-methyl-7-(2,4-dimethylanilino) fluoran; 3-dibutylamino-6-methyl-7-anilinofluoran and 3-dipentylamino-6-methyl-7-anilinofluoran; 3-dibutylamino-6-methyl-7-anilinofluoran and 3-(N-methyl-N-propylamino)-6-methyl-7-anilinofluoran; 3-dibutylamino-6-methyl-7-anilinofluoran and 3-diethylamino-6-chloro-7-anilinofluoran; 3-dibutylamino-6-methyl-7-anilinofluoran and 3-dibutylamino7-(2-chloroanilino)fluoran; 3-dibutylamino-6-methyl-7-anilinofluoran and 3-N-ethyl-p-toluidino-6-methyl-7-anilinofluoran; 3-dibutylamino-6-methyl-7-anilinofluoran and 3-(N-ethyl-N-tetrahydrofurfurylamino)-6-methyl-7-anilinofluoran;
   3-dibutylamino-6-methyl-7-anilinofluoran and 3-(N-ethyl-N-isobutylamino)-6-methyl-7-anilinofluoran; 3-dibutylamino-6-methyl-7-anilinofluoran and 3-N-ethyl-N-ethoxypropylamino-6-methyl-7-anilinofluoran; 3-dibutylamino-6-methyl-7-anilinofluoran and 2,4-dimethyl-6-[(4-dimethylamino)anilino]fluoran; 3-N-isoamyl-N-ethylamino-6-methyl-7-anilinofluoran and 3-diethylamino-6-methyl-7-anilinofluoran; 3-diethylamino-6-methyl-7-anilinofluoran and 3-N-propyl-N-methylamino-6-methyl-7-anilinofluoran; 3-diethylamino-6-methyl-7-(3-tolyl)aminofluoran and 3-diethylamino-6-methyl-7-anilinofluoran; 3-dibutylamino-6-methyl-7-anilinofluoran and 3,3-bis(1-octyl-2-methylindol-3-yl)phthalide; 3-dibutylamino-6-methyl-7-anilinofluoran and mixture of 2-phenyl-4-(4-diethylaminophenyl)-4-(4-methoxyphenyl)-6-methyl-7-dimethylamino-3,1-benzoxazine and 2-phenyl-4-(4-diethylaminophenyl)-4-(4-methoxyphenyl)-8-methyl-7-dimethylamino-3,1-benzoxazine; 3-dibutylamino-6-methyl-7-anilinofluoran and 4,4'-[1-methylethylidene)bis(4,1-phenyleneoxy-4,2-quinazoline-diyl)]bis[N,N-diethylbenzenamine].

In the above monophase solid solutions the first compound is in a molar ratio of 75 to 99.9% by mole, the second compound is in a ratio of 25 to 0.1 % by mole.

Examples of monophase solid solutions comprising two components A and B in the stated ratios are: 3-dibutylamino-6-methyl-7-anilinofluoran (99.9%), 3-diethylamino-6-methyl-7-anilinofluoran (0.1 %); 3-dibutylamino-6-methyl-7-anilinofluoran (99%), 3-diethylamino-6-methyl-7-anilinofluoran (1%); 3-dibutylamino-6-methyl-7-anilinofluoran (95%), 3-diethylamino-6-methyl-7-anilinofluoran (5%); 3-dibutylamino-6-methyl-7-anilinofluoran (90%) and 3-N-2-pentyl-N-ethylamino-6-methyl-7-anilinofluoran (10%); 3-dibutylamino-6-methyl-7-anilinofluoran (95%) and 3-N-2-pentyl-N-ethylamino-6-methyl-7-anilinofluoran (5%); 3-dibutylamino-6-methyl-7-anilinofluoran (90%) and 3-N-isopropyl-N-ethylamino-6-methyl-7-anilinofluoran (10%); 3-dibutylamino-6-methyl-7-anilinofluoran (95%) and 3-N-isopropyl-N-ethylamino-6-methyl-7-anilinofluoran (5%); 3-dibutylamino-6-methyl-7-anilinofluoran (90%) and 3-N-Cyclohexylmethyl-N-ethylamino-6-methyl-7-anilinofluoran (10%); 3-dibutylamino-6-methyl-7-anilinofluoran (95%) and 3-N-Cyclohexylmethyl-N-ethylamino-6-methyl-7-anilinofluoran (5%); 3-dibutylamino-6-methyl-7-anilinofluoran (90%) and 3-dipropylamino-6-methyl-7-anilinofluoran (10%); 3-dibutylamino-6-methyl-7-anilinofluoran (95%) and 3-dipropylamino-6-methyl-7-anilinofluoran (5%); 3-dibutylamino-6-methyl-7-anilinofluoran (90%) and 3-N-2-butyl-N-ethylamino-6-methyl-7-anilinofluoran (10%); 3-dibutylamino-6-methyl-7-anilinofluoran (95%) and 3-N-2-butyl-N-ethylamino-6-methyl-7-anilinofluoran (5%);
3-dibutylamino-6-methyl-7-anilinofluoran (90%), 3-diethylamino-6-methyl-7-anilinofluoran (10%); 3-dibutylamino-6-methyl-7-anilinofluoran (85%), 3-diethylamino-6-methyl-7-anilinofluoran (15%); 3-dibutylamino-6-methyl-7-anilinofluoran (80%), 3-diethylamino-6-methyl-7-anilinofluoran (20%); 3-dibutylamino-6-methyl-7-anilinofluoran (95%), 3-N-isoamyl-N-ethylamino-6-methyl-7-anilinofluoran (5%); 3-dibutylamino-6-methyl-7-anilinofluoran (90%), 3-N-isoamyl-N-ethylamino-6-methyl-7-anilinofluoran (10%); 3-dibutylamino-6-methyl-7-anilinofluoran (80%), 3-N-isoamyl-N-ethylamino-6-methyl-7-anilinofluoran (20%); 3-dibutylamino-6-methyl-7-anilinofluoran (90%), 3-N-cyclohexyl-N-methylamino-6-methyl-7-anilinofluoran (10%); 3-diethylamino-6-methyl-7-anilinofluoran (90%), 3-N-isoamyl-N-ethylamino-6-methyl-7-anilinofluoran (10%); 3-diethylamino-6-methyl-7-anilinofluoran (80%), 3-N-isoamyl-N-ethylamino-6-methyl-7-anilinofluoran (20%); 3-diethylamino-6-methyl-7-anilinofluoran (20%), 3-N-isoamyl-N-ethylamino-6-methyl-7-anilinofluoran (80%); 3-diethylamino-6-methyl-7-anilinofluoran (10%), 3-N-isoamyl-N-ethylamino-6-methyl-7-anilinofluoran (90%); 3-diethylamino-6-methyl-7-anilinofluoran (90%), 3-N-propyl-N-methylamino-6-methyl-7-anilinofluoran (10%); 3-diethylamino-6-methyl-7-anilinofluoran (80%), 3-N-propyl-N-methylamino-6-methyl-7-anilinofluoran (20%); 3-diethylamino-6-methyl-7-anilinofluoran (20%), 3-N-propyl-N-methylamino-6-methyl-7-anilinofluoran (80%); 3-diethylamino-6-methyl-7-anilinofluoran (10%), 3-N-propyl-N-methylamino-6-methyl-7-anilinofluoran (90%); 3-diethylamino-6-methyl-7-anilinofluoran (10%), 3-diethylamino-6-methyl-7-(3-tolyl)aminofluoran (90%); 3-diethylamino-6-methyl-7-anilinofluoran (20%), 3-diethylamino-6-methyl-7-(3-tolyl)aminofluoran (80%); 3-dibutylamino-6-methyl-7-anilinofluoran (90%), 3,3-bis(1-octyl-2-methylindol-3-yl)phthalide (10%); 3-dibutylamino-6-methyl-7-anilinofluoran (80%), 3,3-bis(1-octyl-2-methylindol-3-yl)phthalide(20%); 3-dibutylamino-6-methyl-7-anilinofluoran (90%), mixture of 2-phenyl-4-(4-diethylaminophenyl)-4-(4-methoxyphenyl)-6-methyl-7-dimethylamino-3,1-benzoxazine and 2-phenyl-4-(4-diethylaminophenyl)-4-(4-methoxyphenyl)-8-methyl-7-dimethylamino-3,1-benzoxazine(10%); 3-dibutylamino-6-methyl-7-anilinofluoran (80%), mixture of 2-phenyl-4-(4-diethylamino-phenyl)-4-(4-methoxyphenyl)-6-methyl-7-dimethylamino-3,1-benzoxazine and 2-phenyl-4-(4-diethylaminophenyl)-4-(4-methoxyphenyl)-8-methyl-7-dimethylamino-3,1-benzoxazine(20%); 3-dibutylamino-6-methyl-7-anilinofluoran (90%), 4,4'-[1-methylethylidene)bis(4,1-phenyleneoxy-4,2-quinazolinediyl)]bis[N,N-diethylbenzenamine](10%); 3-dibutylamino-6-methyl-7-anilinofluoran (80%), 4,4'-[1-methylethylidene)bis(4,1-phenyleneoxy-4,2-quinazolinediyl)]-bis[N,N-diethylbenzenamine] (20%).

The monophase solid solutions can be used singly or as a mixture with other colour forming compounds such as triphenylmethanes, lactones, fluorans, benzoxazines and spiropyrans; or they may also be used together with further black colour forming compounds. Examples of such other colour forming compounds are given hereinbefore.

The monophase solid solutions can be prepared by a variety of methods. One such method is the recrystallisation method wherein a physical mixture of the desired components is dissolved, with or without heating, in a suitable solvent or solvent mixture. Suitable solvents include but are not limited to toluene, benzene, xylene, dichlorobenzene, chlorobenzene, 1,2-dichloroethane, methanol, ethanol, iso-propanol, n-butanol, acetonitrile, dimethylformamide or mixtures of these solvents with each other and with water. The monophase solid solution is then isolated by crystallisation from the solvent or solvent mixture. This can be brought about by cooling, standing, addition of a further solvent to promote crystallisation or concentration by standard means such as distillation, steam distillation and vacuum distillation. When the monophase solid solution is isolated by concentration it may be advantageous to do so in the presence of a small amount of base, to improve the visual aspect of the isolated product.

Alternatively, monophase solid solutions can be prepared from mixtures of the appropriate starting materials. The technique can be used to produce mixtures of two or more fluorans or phthalides. For example, mixtures of two fluorans are produced by replacing a single starting material with two analogous materials to the same total molar concentration in the reaction. In the case of fluorans, these starting materials are derivatives of amino phenols, phthalic anhydrides, keto acids and diphenylamines.

In addition, the heat sensitive coating composition can contain a previously known developer, unless the colour forming performance of the resultant heat sensitive material is disturbed thereby. Such developers are exemplified by but not limited to; 4,4'-isopropylidene bisphenol, 4,4'-sec-butylidene bisphenol, 4,4'-cyclohexylidene bisphenol, 2,2-bis-(4-hydroxyphenyl)-4-methylpentane, 2,2-dimethyl-3,3-di(4-hydroxyphenyl)butane, 2,2'-dihydroxydiphenyl, 1-phenyl-1,1-bis(4-hydroxyphenyl)butane, 4-phenyl-2,2-bis(4-hydroxyphenyl)butane, 1-phenyl-2,2-bis(4hydroxyphenyl)butane, 2,2-bis(4'-hydroxy-3'-methylphenyl)-4-methylpentane, 2,2-bis(4'-hydroxy-3'-tert-butyllphenyl)-4-methylpentane, 4,4'-sec-butylidene-bis (2-methylphenol), 4,4'-isopropylidene-bis (2-tert-butylphenol), 2,2-bis(4'-hydroxy-3'-isopropylphenyl)-4-methylpentane, allyl-4,4-bis (4'-hydroxyphenyl) pentanoate, propargyl-4,4-bis(4'-hydroxyphenyl) pentanoate, n-propyl-4,4-bis (4'-hydroxyphenyl) pentanoate, 2,4-bis (phenylsulfonyl) phenol, 2-(4-methylsulfonyl)-4-(phenylsulfonyl) phenol, 2-(phenylsulfonyl)-4-(4-methylsulfonyl) phenol, 2,4-bis (4-methylphenylsulfonyl) phenol, pentamethylene-bis(4-hydroxybenzoate), 2,2-dimethyl-3,3-di(4-hydroxyphenyl)pentane, 2,2-di(4-hydroxyphenyl)hexane, 4,4'-dihydroxydiphenyl thioether, 1,7-di(4-hydroxyphenylthio)-3,5-dioxaheptane, 2,2'-bis(4-hydroxyphenylthio)diethyl ether, 4,4'-dihydroxy-3,3'-dimethylphenyl thioether; benzyl-4-hydroxybenzoate, ethyl-4-hydroxybenzoate, propyl-4-hydroxybenzoate, isopropyl-4-hydroxybenzoate, butyl-4-hydroxybenzoate, isobutyl-4-hydroxybenzoate, 4,4'-dihydroxydiphenyl sulfone, 2,4'-dihydroxydiphenyl sulfone, 4-hydroxy-4'-methyldiphenyl sulfone, 4-hydroxy-4'-isopropoxydiphenyl sulfone, 4-hydroxy-4'-butoxydiphenyl sulfone, 4,4'-dihydroxy-3,3'-diallyldiphenyl sulfone, 3,4-dihydroxy-4'-methyldiphenyl sulfone, 4,4'-dihydroxy-3,3',5,5'-tetrabromodiphenyl sulfone, 4,4'-bis (p-toluenesulphonylamino-carbonylamino) diphenylmethane, N-p-toluenesulphonyl-N'-phenyl urea, dimethyl 4-hydroxyphthalate, dicyclohexyl 4-hydroxyphthalate, diphenyl 4-hydroxyphthalate, 4-[2-(4-methoxyphenyloxy)ethyloxy] salicylate, 3,5-di-tert-butylsalicylic acid, 3-benzyl salicylic acid, 3-(α-methylbenzyl) salicylic acid, 3-phenyl-5-(α,α-dimethylbenzyl) salicylic acid, 3,5-di-α-methylbenzyl salicylic acid; metal salts of salicylic acid, 2-benzylsulfonylbenzoic acid, 3-cyclohexyl-4-hydroxybenzoic acid, zinc benzoate, zinc 4-nitrobenzoate, 4-(4'-phenoxybutoxy)phthalic acid, 4-(2'-phenoxyethoxy)phthalic acid, 4-(3'-phenylpropyloxy)phthalic acid, mono (2-hydroxyethyl) -5-nitro-isophthalic acid, 5-benzyloxycarbonyl isophthalic acid, 5-(1'-phenylethanesulfonyl) isophthalic acid, bis(1,2-dihydro-1,5-dimethyl-2-phenyl-3H-pyrazol-3-one-O)bis(thiocyanato-N) zinc, zinc bis[4-n-octyloxycarbonylamino)salicylate] dihydrate, 4-hydroxybenzoate ester derivative (manufactured by Asahi Denka Kogyo under the trade name ADEKA ARKLS K-5®) and mixtures thereof.

Representative examples of sensitizer are stearamide, methylol stearamide, methylene bis-stearamide, ethylene bis-stearamide, amide waxes, p-benzylbiphenyl, m-terphenyl, 2-benzyloxynaphthalene, 4-methoxybiphenyl, dibenzyl oxalate, di(4-methylbenzyl) oxalate, di(4-chlorobenzyl) oxalate, dimethyl phthalate, dibenzyl terephthalate, dibenzyl isophthalate, 1,2-diphenoxyethane, 1,2-bis(4-methylphenoxy) ethane, 1,2-bis(3-methylphenoxy) ethane, 4,4'-dimethylbiphenyl, phenyl-1-hydroxy-2-naphthoate, 4-methylphenyl biphenyl ether, 1,2-bis(3,4-dimethylphenyl) ethane, 2,3,5,6-4'-methyldiphenyl methane, 1,4-diethoxynaphthalene, 1,4-diacetoxybenzene, 1,4-diproprionoxybenzene, o-xylylene-bis(phenyl ether), 4-(m-methylphenoxymethyl) biphenyl, p-hydroxyacetanilide, p-hydroxybutyranilide, p-hydroxynonananilide, p-hydroxylauranilide, p-hydroxyoctadecananilide, N-phenyl-phenylsulphonamide, acetyl biphenyl compounds (e.g. as described in JP2003 063149A2) and 2-phenoxyethyl-N-phenylcarbamate.

Representative stabilisers for use in the inventive method are selected from the group consisting of 2,2'-methylene-bis(4-methyl-6-tert-butylphenol), 2,2'-methylene-bis(4-ethyl-6-tert-butylphenol), 4,4'-butylidene-bis(3-methyl-6-tert-butylphenol), 4,4'-thio-bis(2-tert-butyl-5-methylphenol), 1,1,3-tris(2-methyl-4-hydroxy-5-tert-butylphenyl) butane, 1,1,3-tris(2-methyl-4-hydroxy-5-cyclohexylphenyl) butane, bis (3-tert-butyl-4-hydroxy-6-methylphenyl) sulfone, bis (3,5-dibromo-4-hydroxyphenyl) sulfone, 4,4'-sulfinyl bis (2-tert-butyl-5-methylphenol), 2,2'-methylene bis (4,6-di-tert-butylphenyl) phosphate and alkali metal, ammonium and polyvalent metal salts thereof, 4-benzyloxy-4'-(2-methylglycidyloxy) diphenyl sulfone, 4,4'-diglycidyloxydiphenyl sulfone, 1,4-diglycidyloxybenzene, 4-[α-(hydroxymethyl)benzyloxy]-4-hydroxydiphenyl sulfone, metal salts of p-nitrobenzoic acid, metal salts of phthalic acid mono benzyl ester, metal salts of cinnamic acid and mixtures thereof.

Preferred stabilisers are 4,4'-butylidene-bis(3-methyl-6-tert-butylphenol), 4,4'-thio-bis(2-tert-butyl-5-methylphenol), 1,1,3-tris(2-methyl-4-hydroxy-5-tert-butylphenyl) butane, 1,1,3-tris(2-methyl-4-hydroxy-5-cyclohexylphenyl) butane, 4-benzyloxy-4'-(2-methylglycidyloxy) diphenyl sulfone and mixtures thereof.

Representative binders for use in the heat sensitive recording layer include polyvinyl alcohol (fully or partially hydrolysed), carboxy-modified polyvinyl alcohol, acetoacetyl-modified polyvinyl alcohol, diacetone-modified polyvinyl alcohol, silicon-modified polyvinyl alcohol, sulfonic-modified polyvinyl alcohol, oxidised starch, gelatine, casein, derivatives of cellulose such as hydroxyethyl cellulose, methyl cellulose, ethyl cellulose, carboxymethyl cellulose and acetyl cellulose, starch-vinyl acetate graft copolymers, styrene-maleic anhydride copolymers, methyl vinyl ether-maleic anhydride copolymers, isopropylene-maleic anhydride copolymers and like water-soluble resins, styrene-butadiene latex, acrylic latex, urethane latex and like water-dispersible resins and mixtures thereof. The amount of the binder to be used is about 5 to 40 weight-%, preferably about 7 to 30 % by weight, based on the heat sensitive recording layer.

Representative pigments for use in the heat sensitive recording layer include ground calcium carbonate, precipitated calcium carbonate, kaolin, calcined kaolin, aluminium hydroxide, talc, titanium dioxide, zinc oxide, amorphous silica, barium sulfate, polystyrene resin, urea-formaldehyde resin, hollow plastic pigment and mixtures thereof. The amount of pigment to be used is about 5 to 75 weight-%, preferably about 10 to 60 weight-% based on the heat sensitive recording layer.

Representative lubricants for use in the heat sensitive recording layer include stearamide, methylene bis stearamide, polyethylene wax, carnauba wax, paraffin wax, zinc stearate, calcium stearate and mixtures thereof. The amount of lubricants to be used is usually in the range from 2 to 10 weight-%, preferably from 3 to 7 weight-%, based on the heat sensitive coating composition.

Examples of various auxiliaries that can be added to the heat sensitive layer coating composition, if so desired, include surfactants such as sodium dioctylsulfosuccinate, sodium dodecybenzenesulfonate, sodium lauryl sulfate and fatty acid metal salts; insolubilisers such as glyoxal, urea-formaldehyde resins, melamine-formaldehyde resins, polyamide resins, polyamideamineepichlorohydrin resins, adipic acid dihydrazide, boric acid, borax, ammonium zirconium carbonate and potassium zirconium carbonate; antifoaming agents, fluorescent whitening agents, fluorescent dyes and/or pigments, tinting dyes and UV absorbers. The amount of auxiliaries to be used is usually chosen within the range of from 0.1 to 5 weight-%, based on the heat sensitive coating composition.

The ultraviolet absorbers may be employed in either the thermosensitive colouring layer or in a protective layer, and if desired, may be used in microencapsulated form in the protective layer.

Representative examples of ultraviolet absorbers that may be used in the invention include phenyl salicylate, p-tert-butylphenyl salicylate, p-octylphenyl salicylate and like salicylic acid type ultraviolet absorbers:
2,4-Dihydroxybenzophenone, 2-hydroxy-4-methoxybenzophenone, 2-hydroxy-4-octyloxybenzophenone, 2-hydroxy-4-dodecyloxybenzophenone, 2,2'-dihydroxy-4-methoxybenzophenone, 2,2'-dihydroxy-4,4'-dimethoxybenzophenone, 2-hydroxy-4-methoxy-5-sulfobenzophenone and like benzophenone type ultraviolet absorbers;
   2-ethylhexyl-2-cyano-3,3-diphenylacrylate, ethyl-2-cyano-3,3-diphenylacrylate and like cyanoacrylate type ultraviolet absorbers; bis(2,2,6,6-tetramethyl-4-piperidyl) sebacate, bis(2,2,6,6-tetramethyl-4-piperidyl) succinate, bis(1,2,2,6,6-pentamethyl-4-piperidyl)-2-(3,5-di-tert-butyl-4-hydroxybenzyl)-2-n-butyl malonate and like hindered amine type ultraviolet absorbers;
2-(2'-Hydroxyphenyl) benzotriazole, 2-(2'-hydroxy-5'-methylphenyl) benzotriazole, 2-(2'-hydroxy-5'-tert-butylphenyl)benzotriazole, 2-(2'-hydroxy-3,5'-di-tert-butylphenyl) benzotriazole, 2-(2'-hydroxy-3'-tert-butyl-5'-methylphenyl)-5-chlorobenzotriazole, 2-(2'-hydroxy-3,5'-di-tert-butylphenyl)-5-chlorobenzotriazole, 2-(2'-hydroxy-3,5'-di-tert-butylphenyl)-5-tert-butylbenzotriazole, 2-(2'-hydroxy-3,5'-di-tert-amylphenyl) benzotriazole, 2-(2'-hydroxy-3,5'-di-tert-amylphenyl)-5-tert-amylbenzotriazole, 2-(2'-hydroxy-3,5'-di-tert-amylphenyl)-5-methoxybenzotriazole, 2-[2'-hydroxy-3'-(3",4",5",6"-tetrahydrophthalimido-methyl)-5'-methylphenyl] benzotriazole, 2-(2'-hydroxy-5'-tert-octylphenyl)benzotriazole, 2-(2'-hydroxy-3'-sec-butyl-5'-tert-butylphenyl) benzotriazole, 2-(2'-hydroxy-3'-tert-amyl-5'-phenoxyphenyl)-5-methylbenzotriazole, 2-(2'-hydroxy-5'-n-dodecylphenyl) benzotriazole, 2-(2'-hydroxy-5'-sec-octyloxyphenyl)-5-phenylbenzotriazole, 2-(2'-hydroxy-3'-tert-amyl-5'-phenylphenyl)-5-methoxybenzotriazole, 2-[2'-hydroxy-3',5'-bis(α,α-dimethylbenzyl)-phenyl] benzotriazole and like benzotriazole ultraviolet absorbers;
2-(2'-Hydroxy-3'-dodecyl-5'-methylphenyl) benzotriazole, 2-(2'-hydroxy-3'-undecyl-5'-methylphenyl) benzotriazole, 2-(2'-hydroxy-3'-tridecyl-5'-methylphenyl) benzotriazole, 2-(2'-hydroxy-3'-tetradecyl-5'-methylphenyl) benzotriazole, 2-(2'-hydroxy-3'-pentadecyl-5'-methylphenyl) benzotriazole, 2-(2'-hydroxy-3'-hexaadecyl-5'-methylphenyl) benzotriazole, 2-[2'-hydroxy-4'-(2"-ethylhexyl)oxyphenyl] benzotriazole, 2-[2'-hydroxy-4'-(2"-ethylheptyl)oxyphenyl] benzotriazole, 2-[2'-hydroxy-4'-(2"-ethyloctyl)oxyphenyl] benzotriazole, 2-[2'-hydroxy-4'-(2"-propyloctyl)oxyphenyl] benzotriazole, 2-[2'-hydroxy-4'-(2"-propylheptyl)oxyphenyl] benzotriazole, 2-[2'-hydroxy-4'-(2"-propylhexyl)oxyphenyl] benzotriazole, 2-[2'-hydroxy-4'-(1"-ethylhexyl)oxyphenyl] benzotriazole, 2-[2'-hydroxy-4'-(1"-ethylheptyl)oxyphenyl] benzotriazole, 2-[2'-hydroxy-4'-(1"-ethyloctyl)oxyphenyl] benzotriazole, 2-[2'-hydroxy-4'-(1"-propyloctyl)oxyphenyl] benzotriazole, 2-[2'-hydroxy-4'-(1"-propylheptyl)oxyphenyl] benzotriazole,, 2-[2'-hydroxy-4'-(1"-propylhexyl)oxyphenyl] benzotriazole, 2-(2'-hydroxy-3'-sec-butyl-5'-tert-butylphenyl)-5-n-butylbenzotriazole, 2-(2'-hydroxy-3'-sec-butyl-5'-tert-butylphenyl)-5'-tert-pentylbenzotriazole, 2-(2'-hydroxy-3'-sec-butyl-5'-tert-butylphenyl)-5-n-pentylbenzotriazole, 2-(2'-hydroxy-3'-sec-butyl-5'-tert-pentylphenyl)-5'-tert-butylbenzotriazole, 2-(2'-hydroxy-3'-sec-butyl-5'-tert-pentylphenyl)-5'-n-butylbenzotriazole, 2-(2'-hydroxy3',5'-di-tert-butylphenyl)-5-sec-butylbenzotriazole, 2-(2'-hydroxy-3',5'-di-tert-pentylphenyl)-5-sec-butylbenzotriazole, 2-(2'-hydroxy-3'-tert-butyl-5'-tert-pentylphenyl)-5-sec-butylbenzotriazole, 2-(2'-hydroxy-3,5'-di-sec-butylphenyl)-5-chlorobenzotriazole, 2-(2'-hydroxy-3,5'-di-sec-butylphenyl)-5-methoxybenzotriazole, 2-(2'-hydroxy-3,5'-di-sec-butylphenyl)-5-tert-butylbenzotriazole, 2-(2'-hydroxy-3,5'-di-sec-butylphenyl)-5-n-butylbenzotriazole, octyl-5-tert-butyl-3-(5-chloro-2H-benzotriazole-2-yl)-4-hydroxybenzene propionate, condensate of methyl -3-[tert-butyl-5-(2H-benzotriazole-2-yl)-4-hydroxyphenyl] propionate and polyethylene glycol (molecular weight: about 300) and like benzotriazole ultraviolet absorbers.

The heat sensitive recording layer coating composition is applied to the support in an amount of about 1 to 10 g/m², preferably about 3 to 7 g/m² on a dry weight basis. The heat sensitive recording layer coating composition may be applied to the support by a known coating device such as a coating bar, a roll coater, an air knife coater, a blade coater, a gravure coater, a die coater or a curtain coater.

If desired, an undercoat layer can also be provided between the support and the heat sensitive recording layer in order to improve the thermal sensitivity and efficiency during recording. The undercoat layer is formed by coating the support with an undercoat layer coating composition comprising as main components organic hollow particles and/or an oil absorbing pigment and a binder and then drying the coating.

Representative examples of oil absorbing pigments include clay, calcined clay, amorphous silica, precipitated calcium carbonate and talc. The average pigment diameter may be in the range 0.01 to 5 µm, preferably from 0.02 to 3 µm.

Representative examples of organic hollow particles include particles having a shell made from an acrylic resin, styrene-based resin and vinylidene chloride-based resin and having a void ratio of about 50 to 99 %. The outside diameter of the organic hollow particle may be in the range 0.5 to 10 µm, preferably from 1 to 5 µm.

The organic hollow particles may be expandable hollow particles. A typical example of such expandable hollow particles are microcapsules having an average diameter of 0.1 to 5 µm comprising a vinylidene chloride resin shell and butane gas as fill material. When a support coated with an undercoat layer comprising such expandable hollow particles is subjected to heat treatment, the microcapsules expand to an average particle diameter of 1 to 30 µm.

When the oil absorbing pigment is used in combination with the organic hollow particles, the combined amount of the two components is preferably about 40 to 90 weight-%, particularly about 50 to 80 weight-% based on the undercoat layer.

The binder used in the undercoat layer usually is selected from the binders to be used in the heat sensitive recording layer and particularly preferred examples are styrene-butadiene latex, a polyvinyl alcohol or starch-vinyl acetate copolymer. The amount of binder to be used usually is in the range of about 5 to 30 weight-%, particularly 10 to 20 weight-%, based on the undercoat layer.

As a rule, the undercoat recording layer coating composition is applied to the support in an amount of about 2 to 20 g/m², preferably about 4 to 12 g/m² on a dry weight basis.

If desired, a protective layer may be provided on the heat sensitive recording layer to enhance the resistance of the recorded image to water and chemicals, for example, oils, fats, alcohols, plasticisers and the like to improve the runability during recording. Generally, the protective layer is formed by coating the heat sensitive recording layer with a protective layer coating composition comprising as main components a binder having film-forming ability and optionally, a pigment and/or an insolubiliser and/or a lubricant and then drying the resulting coating film.

Representative examples of the binder to be used in the protective layer coating composition include polyvinyl alcohol (fully or partially hydrolysed), carboxy-modified polyvinyl alcohol, acetoacetyl-modified polyvinyl alcohol, diacetone-modified polyvinyl alcohol, silicon-modified polyvinyl alcohol, starches, gelatine, casein, gum arabic, derivatives of cellulose such as hydroxyethyl cellulose, methyl cellulose, ethyl cellulose, carboxymethyl cellulose and acetyl cellulose, starch vinyl acetate graft copolymers, styrene-maleic anhydride copolymers, methyl vinyl ether-maleic anhydride copolymers, isopropylene-maleic anhydride copolymers and like water-soluble resins, styrene-butadiene latex, acrylic latex, urethane latex and like water-dispersible resins and mixtures thereof.

Pigment, insolubiliser, lubricant and, if required, other auxiliaries may be selected from those used in the heat sensitive recording layer coating composition as described above.

Usually, the protective layer coating composition is applied in an amount of about 0.5 to 10 g/m², preferably about 1 to 5 g/m² on a dry weight basis and may be applied with a similar coating device to that used to coat the heat sensitive layer.

It is also possible to provide a protective layer, an adhesive layer and a magnetic layer on the rear side of the support.

Non top coated heat sensitive coating compositions prepared with the inventive method exhibit excellent printing characteristics when prepared by standard technologies, for example UV-offset and flexographic printing. Letterpress and dry-offset printing processes may also be used. Top coated heat sensitive coating compositions prepared with the inventive method exhibit excellent printing characteristics. Further uses of the inventive method concern conventional direct thermal printing (fax, point of sale receipts, tickets, labels, tags, plotter papers); two colour and multi colour heat sensitive coating compositions; and reversible heat sensitive coating compositions.

The following non-limiting examples illustrate the novel materials of the present invention.

### Examples

### Example 1: Preparation of Dispersion A-1 (comparative)

A composition comprising 10 g of N-p-toluenesulfonyl-N'-3-(p-toluenesulfonyloxy)phenylurea synthesised as described in Example 4 of WO 00/35679, 0.2 g of a dispersing agent (sodium salt of naphthalene sulfonic acid condensation product with formaldehyde, TAMOL® NN 9401 from BASF SE), 6.7 g of a 10% by weight solution of polyvinyl alcohol (Poval PVA-203 from Kuraray, viscosity [mPas] 3.2 to 3.6, hydrolysis [mol.-%] 87 to 89.0, ash max [%] 0.4, volatile max [%] 5.0) and 8.1 g of water is milled in a bead mill to an average particle diameter of 1.0 µm to obtain Dispersion A-1.

### Example 2: Preparation of Dispersion A-2

A composition comprising 10 g grams of N-p-toluenesulfonyl-N'-3-(p-toluenesulfonyloxy)phenylurea synthesised an described in Example 1 of WO 03/101943, 0.2 g of a dispersing agent (sodium salt of naphthalene sulfonic acid condensation product with formaldehyde, TAMOL® NN 9401 from BASF SE), 6.7 g parts) of a 10% by weight solution of polyvinyl alcohol (Poval PVA-203 from Kuraray, viscosity [mPas] 3.2 to 3.6, hydrolysis [mol.-%] 87 to 89.0, ash max [%] 0.4, volatile max [%] 5.0) and 8.1 g of water is milled in a bead mill to an average particle diameter of 1.0 µm to obtain Dispersion A-2.

### Example 3: Preparation of Dispersion B-1

A composition comprising 10 g of 3-dibutylamino-6-methyl-7-anilnofluoran, 10 g of a 20% by weight solution of a polyvinyl alcohol (Poval PVA-203 from Kuraray, viscosity [mPas] 3.2 to 3.6, hydrolysis [mol.-%] 87 to 89.0, ash max [%] 0.4, volatile max [%] 5.0), 0.2 g of the surfactant 2,4,7,9-tetramethyl-5-decyne-4,7-diol (Surfynol® 104 from Air Products) and 4.8 g of water is milled to an average particle diameter of 1.0 µm to obtain Dispersion B-1.

### Example 4: Preparation of Dispersion B-2

A composition comprising 10 g of 3-(N-ethyl-N-isoamylamino)-6-methyl-7-anilnofluoran, 10 g of a 20% by weight solution of a polyvinyl alcohol (Poval PVA-203 from Kuraray, viscosity [mPas] 3.2 to 3.6, hydrolysis [mol.-%] 87 to 89.0, ash max [%] 0.4, volatile max [%] 5.0), 0.2 g of the surfactant 2,4,7,9-tetramethyl-5-decyne-4,7-diol (Surfynol® 104 from Air Products) and 4.8 g of water is milled to an average particle diameter of 1.0 µm to obtain Dispersion B-2.

### Example 5: Preparation of Dispersion B-3

A composition comprising 10 g of 3-(N-ethyl-N- p-tolylamino)-6-methyl-7-anilnofluoran, 10 g of a 20% by weight solution of a polyvinyl alcohol (Poval PVA-203 from Kuraray, viscosity [mPas] 3.2 to 3.6, hydrolysis [mol.-%] 87 to 89.0, ash max [%] 0.4, volatile max [%] 5.0), 0.2 g of the surfactant 2,4,7,9-tetramethyl-5-decyne-4,7-diol (Surfynol® 104 from Air Products) and 4.8 g of water is milled to an average particle diameter of 1.0 µm to obtain Dispersion B-3.

### Example 6: Preparation of Dispersion C-1

A composition comprising 10 g of benzyl-2-naphthyl ether, 0.2 g of a dispersing agent (sodium salt of naphthalene sulfonic acid condensation product with formaldehyde, TAMOL® NN 9401 from BASF SE), 3.4 g of a 10% by weight solution of a polyvinyl alcohol (Poval PVA- 203 from Kuraray, viscosity [mPas] 3.2 to 3.6, hydrolysis [mol.-%] 87 to 89.0, ash max [%] 0.4, volatile max [%] 5.0) and 11.4 g of water is milled to an average particle diameter of 1.0 µm to obtain Dispersion C-1.

### Example 7: Preparation of Dispersion C-2

A composition comprising 10 g of 1,2-di(3-methylphenoxy)ethane, 0.2 g of a dispersing agent (sodium salt of naphthalene sulfonic acid condensation product with formaldehyde, TAMOL® NN 9401 from BASF SE), 3.4 g of a 10% by weight solution of a polyvinyl alcohol (Poval PVA-203 from Kuraray, viscosity [mPas] 3.2 to 3.6, hydrolysis [mol.-%] 87 to 89.0, ash max [%] 0.4, volatile max [%] 5.0) and 11.4 g of water is milled to an average particle diameter of 1.0 µm to obtain Dispersion C-2.

### Example 8: Preparation of Dispersion C-3

A composition comprising 10 g of di(4-methylbenzyl)oxalate, 0.2 g of a dispersing agent (sodium salt of naphthalene sulfonic acid condensation product with formaldehyde, TAMOL® NN 9401 from BASF SE), 3.4 g of a 10% by weight solution of a polyvinyl alcohol (Poval PVA-203 from Kuraray, viscosity [mPas] 3.2 to 3.6, hydrolysis [mol.-%] 87 to 89.0, ash max [%] 0.4, volatile max [%] 5.0) and 11.4 g of water is milled to an average particle diameter of 1.0 µm to obtain Dispersion C-3.

### Example 9: Preparation of Dispersion D-1

A composition comprising 30 g precipitated calcium carbonate (Socal® P3 from Solvay Chemicals, powder 0.2 to 0.3 µm particle size), 0.1 g of an aqueous solution of a dispersing agent (sodium polyacrylate (DISPEX®N40 from BASF SE), pH 7.5, solid content 45% by weight, active content 40% by weight, viscosity at 25°C (Brookfield 20 rpm) 400 mPas, density at 20°C: 1.30 g/cm³), and 69.9 g of water is milled to an average particle diameter of 1.0 µm to obtain Dispersion D-1.

### Example 10: Preparation of Dispersion D-2

A composition comprising 30 g kaolin (Ultra White® 90 from BASF SE, ISO Brightness 88%, Sedigraph particle size 98% <2 µm), 0.1 g of an aqueous solution of a dispersing agent (sodium polyacrylate (DISPEX®N40 from BASF SE), pH 7.5, solid content 45% by weight, active content 40% by weight, viscosity at 25°C (Brookfield 20 rpm) 400 mPas, density at 20°C: 1.30 g/cm³), and 69.9 g of water is milled to an average particle diameter of 1.0 µm to obtain Dispersion D-2.

### Example 11: Preparation of Dispersion D-3

A composition comprising 30 g aluminium hydroxide (Martifin® OL-107, Martinswerk, ISO brightness 95% and particle size d₉₀ 1.5 to 3.5µm), 0.1 g of an aqueous solution of a dispersing agent (sodium polyacrylate (DISPEX®N40 from BASF SE), pH 7.5, solid content 45% by weight, active content 40% by weight, viscosity at 25°C (Brookfield 20 rpm) 400 mPas, density at 20°C: 1.30 g/cm³), and 69.9 g of water is milled to an average particle diameter of 1.0 µm to obtain Dispersion D-3.

### Example 12: Preparation of Dispersion D-4

A composition comprising 30 g of a modified amorphous silica (Thermosil® 298
from Süd-Chemie), 0.1 g of an aqueous solution of a dispersing agent (sodium polyacrylate (DISPEX®N40 from BASF SE), pH 7.5, solid content 45% by weight, active content 40% by weight, viscosity at 25°C (Brookfield 20 rpm) 400 mPas, density at 20°C: 1.30 g/cm³), and 69.9 g of water is milled to an average particle diameter of 1.0 µm to obtain Dispersion D-4.

### Example 13: Preparation of a heat-sensitive recording layer coating composition

50 g of Dispersion A-1, 25 g of Dispersion B-1, 50 g of Dispersion C-1, 100 g of Dispersion D-1, 27.5 g of a 20% by weight aqueous solution of a polyvinyl alcohol (Poval PVA-203 from Kuraray, viscosity [mPas] 3.2 to 3.6, hydrolysis [mol.-%] 87 to 89.0, ash max [%] 0.4, volatile max [%] 5.0), 21.7 g of a 30% aqueous dispersion of zinc stearate (Hidorin® Z-7 from Chukyo Europe) and 2.3 g of a fluorescent whitening agent (aqueous solution, amount based on the wet weight of the anionic stilbene disulfonic acid derivative, TINOPAL® ABP-Z Liq from BASF), are mixed and stirred to obtain a heat sensitive recording layer coating composition.

### Example 14:

A calcined clay pre-coated base paper (calcined clay = Ansilex 93 from BASF SE) is coated with the above thermal layer coating composition of example 13 such that the coating amount is 6 g/m² on a dry weight basis. The resulting heat sensitive coating composition is calendered to a smoothness of 400 Bekk seconds. Example 14 is repeated with different components from examples 2 to 12 to yield additional heat sensitive coating compositions. Table 1 summarizes the different compositions used.

**Table 1**

| Component | Ex 14 | Ex 15 | Ex 16 | Ex 17 | Ex 18 | Ex 19 | Ex 20 | Ex 21 | Ex 22 | Ex 23 | Ex 24 | Ex 25 |
|---|---|---|---|---|---|---|---|---|---|---|---|---|
| A-1 (comp.) | 50 | | 50 | | 50 | | 75 | | 75 | | 75 | |
| A-2 | | 50 | | 50 | | 50 | | 75 | | 75 | | 75 |
| B-1 | 25 | 25 | 25 | 25 | | | | | 25 | 25 | 25 | 25 |
| B-2 | | | | | 25 | 25 | | | | | | |
| B-3 | | | | | | | 25 | 25 | | | | |
| C-1 | 50 | 50 | 50 | 50 | 50 | 50 | | | | | | |
| C-2 | | | | | | | 50 | 50 | | | | |
| C-3 | | | | | | | | | 50 | 50 | | |
| D-1 | 100 | 100 | | | 100 | 100 | | | | | 133 | 133 |
| D-2 | | | 100 | 100 | | | | | | | | |
| D-3 | | | | | | | 67 | 67 | | | | |
| D-4 | | | | | | | | | 67 | 67 | | |
| 10% PVA solution | 27.5 | 27.5 | 27.5 | 27.5 | 27.5 | 27.5 | 27.5 | 27.5 | 27.5 | 27.5 | 27.5 | 27.5 |
| Hidorin Z-7 | 21.7 | 21.7 | 21.7 | 21.7 | 21.7 | 21.7 | 21.7 | 21.7 | 21.7 | 21.7 | 21.7 | 21.7 |
| Tinopal® ABP-Z Liq | 2.3 | 2.3 | 2.3 | 2.3 | 2.3 | 2.3 | 2.3 | 2.3 | 2.3 | 2.3 | 2.3 | 2.3 |

(amounts shown in Table 1 are in grams)

### Example 26: Static Sensitivity

The heat sensitive coating compositions produced in the above examples of Table 1 are contacted for 5 seconds with 12 separately heated metal blocks at 60, 65, 70, 75, 80, 85, 90, 95, 100, 110, 120 and 130°C. The optical density of each image produced is measured using a Gretag Macbeth SpectroEye densitometer and is shown in Table 2 below.

As can be seen, the examples with component A-2 from Example 2 always shows lower, i.e. better values, which would allow the heat sensitive coating compositions comprising component A-2 to be used in a higher temperature environment.

**Table 2**

| Temp. [°C] | 60 | 65 | 70 | 75 | 80 | 85 | 90 | 95 | 100 | 110 | 120 | 130 |
|---|---|---|---|---|---|---|---|---|---|---|---|---|
| Ex 14 | 0.00 | 0.00 | 0.00 | 0.00 | 0.01 | 0.07 | 0.31 | 0.74 | 1.04 | 1.14 | 1.23 | 1.25 |
| Ex 15 | 0.00 | 0.00 | 0.00 | 0.00 | 0.00 | 0.02 | 0.16 | 0.46 | 0.83 | 1.07 | 1.20 | 1.22 |
| Ex 16 | 0.00 | 0.00 | 0.00 | 0.00 | 0.01 | 0.08 | 0.26 | 0.66 | 0.97 | 1.08 | 1.14 | 1.16 |
| Ex 17 | 0.00 | 0.00 | 0.00 | 0.00 | 0.00 | 0.03 | 0.13 | 0.42 | 0.79 | 1.03 | 1.13 | 1.19 |
| Ex 18 | 0.00 | 0.00 | 0.00 | 0.00 | 0.06 | 0.23 | 0.83 | 1.07 | 1.15 | 1.22 | 1.22 | 1.23 |
| Ex 19 | 0.00 | 0.00 | 0.00 | 0.00 | 0.02 | 0.10 | 0.46 | 0.86 | 1.07 | 1.19 | 1.24 | 1.24 |
| Ex 20 | 0.00 | 0.00 | 0.00 | 0.00 | 0.00 | 0.04 | 0.21 | 0.44 | 0.59 | 0.87 | 1.11 | 1.15 |
| Ex 21 | 0.00 | 0.00 | 0.00 | 0.00 | 0.00 | 0.00 | 0.07 | 0.19 | 0.28 | 0.60 | 0.85 | 1.13 |
| Ex 22 | 0.00 | 0.00 | 0.00 | 0.00 | 0.00 | 0.01 | 0.13 | 0.48 | 1.08 | 1.32 | 1.34 | 1.34 |
| Ex 23 | 0.00 | 0.00 | 0.00 | 0.00 | 0.00 | 0.00 | 0.03 | 0.14 | 0.75 | 1.18 | 1.33 | 1.37 |
| Ex 24 | 0.00 | 0.00 | 0.00 | 0.00 | 0.02 | 0.08 | 0.25 | 0.71 | 0.99 | 1.08 | 1.17 | 1.21 |
| Ex 25 | 0.00 | 0.00 | 0.00 | 0.00 | 0.01 | 0.07 | 0.17 | 0.48 | 0.77 | 1.02 | 1.14 | 1.18 |

### Example 27: Dynamic Sensitivity

Ten individual block areas are printed with increased amounts of energy using an Atlantek thermal response tester model 200. The optical density of each image is measured using a Gretag Macbeth SpectroEye densitometer and is shown in Table 3 below.

**Table 3**

| Energy (mJ/dot) | 0.00 | 0.05 | 0.10 | 0.15 | 0.20 | 0.25 | 0.30 | 0.35 | 0.40 | 0.45 | 0.50 |
|---|---|---|---|---|---|---|---|---|---|---|---|
| Ex 14 | 0.00 | 0.00 | 0.00 | 0.10 | 0.38 | 0.75 | 0.97 | 1.05 | 1.06 | 1.05 | 1.04 |
| Ex 15 | 0.00 | 0.00 | 0.00 | 0.12 | 0.39 | 0.80 | 1.01 | 1.07 | 1.07 | 1.06 | 1.03 |
| Ex 16 | 0.00 | 0.00 | 0.00 | 0.09 | 0.32 | 0.68 | 0.96 | 1.05 | 1.06 | 1.06 | 1.04 |
| Ex 17 | 0.00 | 0.00 | 0.00 | 0.09 | 0.35 | 0.71 | 0.97 | 1.07 | 1.09 | 1.08 | 1.07 |
| Ex 18 | 0.00 | 0.00 | 0.00 | 0.10 | 0.38 | 0.75 | 0.99 | 1.05 | 1.06 | 1.07 | 1.05 |
| Ex 19 | 0.00 | 0.00 | 0.00 | 0.10 | 0.36 | 0.73 | 0.95 | 1.06 | 1.08 | 1.07 | 1.06 |
| Ex 20 | 0.00 | 0.00 | 0.00 | 0.07 | 0.34 | 0.71 | 0.99 | 1.15 | 1.19 | 1.16 | 1.16 |
| Ex 21 | 0.00 | 0.00 | 0.00 | 0.07 | 0.30 | 0.65 | 1.00 | 1.14 | 1.18 | 1.18 | 1.16 |
| Ex 22 | 0.00 | 0.00 | 0.00 | 0.08 | 0.41 | 0.86 | 1.10 | 1.20 | 1.21 | 1.20 | 1.19 |
| Ex 23 | 0.00 | 0.00 | 0.00 | 0.07 | 0.34 | 0.78 | 1.03 | 1.19 | 1.23 | 1.24 | 1.22 |
| Ex 24 | 0.00 | 0.00 | 0.00 | 0.00 | 0.02 | 0.13 | 0.34 | 0.61 | 0.86 | 0.96 | 1.06 |
| Ex 25 | 0.00 | 0.00 | 0.00 | 0.00 | 0.06 | 0.21 | 0.40 | 0.72 | 0.97 | 1.02 | 1.15 |

As can be seen in Table 3, the dynamic sensitivity is within a given range the same as with the comparative compound.

### Example 28: Coloration Temperature

A static sensitivity graph is produced using the data in Table 2. The temperature which corresponds to an optical density ("OD") of 0.2 is then read from the graph and is shown in Table 4 below.

**Table 4**

| | Temperature (°C) for OD = 0.2 | |
|---|---|---|
| Ex 14 / Ex 15 | 88 | 91 |
| Ex 16 / Ex 17 | 89 | 92 |
| Ex 18 / Ex 19 | 84 | 87 |
| Ex 20 / Ex 21 | 90 | 96 |
| Ex 22 / Ex 23 | 92 | 96 |

As can be seen in Table 4, the examples with component A-2 from Example 2 always shows a higher temperature for the onset of coloration, i.e. better values, which would allow the heat sensitive coating compositions comprising component A-2 to be used in a higher temperature environment.

## Claims

1. Method of reducing the static sensitivity of a heat sensitive coating composition comprising a colour forming compound and a colour developer **characterized in** using N-(p-toluenesulphonyl)-N'-(3-p-toluenesulphonyl-oxy-phenyl)urea having an X-ray powder pattern having Bragg angles (2θ/CuK_{α}) of 10.3, 11.1, 13.0, 13.3, 15.6, 17.1, 18.1, 18.4, 19.6, 20.0, 20.8, 21.3, 23.1, 25.0, 25.5, 26.4, 26.8, 27.5, 29.1, 32.8 as colour developer.

2. Method according to claim 1, wherein the reduction is expressed as a temperature increase by at least 2°C at an optical density level of 0.2.

## Patentansprüche

1. Verfahren zur Verringerung der statischen Sensitivität einer wärmeempfindlichen Beschichtungszusammensetzung, umfassend eine farbbildende Verbindung und einen Farbentwickler, **gekennzeichnet durch** Verwendung von N-(p-Toluolsulfonyl)-N'-(3-p-toluolsulfonyloxyphenyl)harnstoff mit einem Röntgenbeugungsmuster mit Bragg-Winkeln (2θ/CuK_{α}) von 10,3, 11,1, 13,0, 13,3, 15,6, 17,1, 18,1, 18,4, 19,6, 20,0, 20,8, 21,3, 23,1, 25,0, 25,5, 26,4, 26,8, 27,5, 29,1, 32,8 als Farbentwickler.

2. Verfahren nach Anspruch 1, bei dem die Verringerung als Temperaturerhöhung um mindestens 2°C bei einem Niveau der optischen Dichte von 0,2 ausgedrückt wird.

## Revendications

1. Procédé de réduction de la sensibilité statique d'une composition de revêtement thermosensible comprenant un composé chromogène et un révélateur de couleur **caractérisé par** l'utilisation de N-(p-toluènesulfonyl)-N'-(3-p-toluènesulfonyl-oxy-phényl)urée ayant un diagramme de rayons X sur poudre ayant des angles de Bragg (2θ/CuK_{α}) de 10,3, 11,1, 13,0, 13,3, 15,6, 17,1, 18,1, 18,4, 19,6, 20,0, 20,8, 21,3, 23,1, 25,0, 25,5, 26,4, 26,8, 27,5, 29,1, 32,8 comme révélateur de couleur.

2. Procédé selon la revendication 1, dans lequel la réduction est exprimée comme une augmentation de température d'au moins 2 °C à un niveau de densité optique de 0,2.
